# EUROPEAN PATENT APPLICATION

(11) **EP 1 900 787 A2**
(43) Date of publication of application: **19.03.2008**
(21) Application number: 07015320.0
(22) Date of filing: 03.08.2007
(51) Int. Cl.: C09J 5/00, C09J 5/06, C09J 7/02

(54) **Multiple or single stage cure adhesive material and method of use**

(30) Priority: 13.09.2006 US 825494 P; 25.07.2007 US 782958
(71) Applicant: Zephyros Inc., Romeo, MI 48065 (US)
(72) Inventor: Hable, Christopher, Romeo, MI 48065 (US); Harthcock, Matthew, Oakland Township, MI 48306 (US); Kosal, David, Columbus, MI 48063 (US); Madaus, Brandon, Richmond, MI 48062 (US)
(74) Representative: Bawden, Peter Charles

(57) **Abstract**

An adhesive is provided for bonding to a first surface (32), a second surface (34) or both. The adhesive typically includes a foam tape with a curable resin.

## Description

### CLAIM OF PRIORITY

This application claims the benefit of the filing date of U.S. Provisional Application No. 60/825,494 filed September 13, 2006, along with U.S. Application Serial No. 11/782,958 filed July 25, 2007 all of which are hereby incorporated by reference for all purposes.

### TECHNICAL FIELD

The present invention generally relates to adhesive materials. More particularly, the present invention relates to an adhesive material that is suitable for cure according to one, two or more mechanisms.

### BACKGROUND OF THE INVENTION

There are many different known adhesive materials and these adhesive materials can be cured according to multiple different mechanisms. Industry, however, often requires that new and innovative adhesive materials be created and formulated to accommodate ever changing processing conditions, changes in articles of manufacture, desired properties and characteristics for certain processes and articles, combinations thereof or the like. As one example, it may be desirable for an adhesive material to provide particular desired characteristics at particular temperatures present during assembly or manufacture of an article of manufacture.

Accordingly, the present invention provides an innovative adhesive material that exhibits one or more characteristics desired by industry. The present invention additionally or attemptively provides a process of using the adhesive material that can aid the efficiency, cost effectiveness, rate or other characteristic of manufacturing techniques or other techniques.

### SUMMARY OF THE INVENTION

A process of adhesion is provided. According to the process a first surface and a second surface are provided. The first surface and second surface are typically part of one or more members of an automotive vehicle or another article of manufacture. The adhesive material is also provided and typically includes a foam tape with a curable resin. The first and second surfaces are contacted with the adhesive material and the curable resin is cured for causing a first level of adhesion to the first and second surface. In one embodiment, the adhesive material includes only or substantially only the foam tape with the curable resin. In other embodiments, however, the tape and resin are integrated with a base material. The base material can include a polymeric material such as an epoxy resin, a curing agent such as an amine curing agent or both. The curable resin typically includes an isocyanate, a polyol and/or a pre-polymer formed therefrom. In one preferred embodiment, the curable resin can be cured by exposure to moisture.

### BRIEF DESCRIPTION OF THE DRAWING

The features and inventive aspects of the present invention will become more apparent upon reading the following detailed description, claims, and drawings, of which the following is a brief description:
Fig. 1 illustrates a sectional view of an exemplary adhesive material adhered to surfaces of members according to an aspect of the present invention;
Fig. 2 illustrates an exemplary assembly process in accordance with an aspect of the present invention;

### DETAILED DESCRIPTION

The present invention is predicated upon the provision of a novel adhesive material, a process of using the adhesive material or both. It is contemplated that the adhesive material can be adhered to one or more surfaces of nearly any article of manufacture and the surface[s] may be part of same or different members of the article. However, the adhesive material has been found particularly useful for adhesion to one or more surfaces of one or more members of an aerospace vehicle, an automotive vehicle, a building, furniture or the like.

The adhesive material includes without limitation, one or any combination of the following:
1) a polymeric foam tape containing one or more curable resins curable by a first mechanism such as exposure to moisture;
2) a possible base material that typically includes one or more polymeric materials, wherein the base material can include:
   a) secondary curing agent that is activated to cure by a secondary mechanism wherein such secondary mechanism can include, for example, exposure to elevated temperature;
   b) blowing agent, which is preferably activated or otherwise activated to produce bubbles and/or foam the base material; and/or
   c) filler, adhesion promoter, impact modifier, flexibilizer, flame retardant, surfactant, any combination thereof or the like.

The process of using the adhesive material typically includes one or any combination of the following steps:
1) provision of one, two or more surfaces that are typically of one, two or more members of an article of manufacture such an automotive vehicle, an aerospace vehicle (e.g., an airplane) or the like
2) contacting of the surface[s] with the adhesive material:
3) curing of the curable resins of the polymeric foam tape to achieve a first degree of cure and/or adhesion to the surface[s] wherein the first mechanism includes, for example, exposure to moisture;
4) in situations where a base material is employed, activation of the secondary curing agent by the secondary mechanism to achieve a second degree of adhesion to the surface[s] wherein the second mechanism includes, for example, exposure to elevated temperatures.

It will be understood that, in each embodiment of the present invention, the adhesive material will typically include an adhesive foam material (i.e., a foam tape) that contains the curable resins and that such adhesive foam material may be employed alone as the adhesive material and may undergo only a single cure or may undergo multiple cures or the foam material may be employed in conjunction with or integrated with or into a base material and the curable resins may undergo a first cure followed by a further cure of the base material.

### Foam Material or Tape

The polymeric foam material or tape containing one or more curable resins can have the one or more curable resins applied on one side or both sides of the polymeric foam tape and the one or more curable resins typically penetrate into the foam carrier, which is typically a foam as described below. In certain applications, the polymeric foam tape can have a thickness of about 1/128 inch (about 0.2 mm) to about 3/16 inch (about 5 mm), a width of about 1/2 inch to about 24 inches, and a length of at least about 6 inches, although larger or smaller dimensions are possible unless otherwise stated. In another preferred embodiment, the foam tape has a thickness of at least about 1/4 inch, more typically at least about 1 inch and even possibly at least about 2 or 3 inches in such that the tape can be compressed between surfaces to which it is to adhere. In such an embodiment, it may be desirable for the foam to be less than 100%, less than 80% or even less than 50% saturated with the one or more curable resins such that compression of the tape does not expel undesirable amounts of the one or more curable resins from the foam.

The polymeric foam that is used as a carrier for the one or more resins can be thermosetting or thermoplastic, and can have a uniform or variable polymer composition structure. The polymeric foam can be flexible, semi-rigid, semi-flexible, viscoelastic, resilient or rigid. The polymeric foam can have a substantially open cell structure, a substantially closed cell structure, or a substantially reticulated cell structure or combinations of such structures may be employed. It is generally preferable that at least a portion of the cell structure is open. In certain applications, the polymeric foam can have an average cell density greater than about 10 pores per inch (ppi) and an elasticity greater than about 1%. The polymeric foam can be a foam having an affinity to water in the range of hydrophilic to hydrophobic. The average density of the polymeric foam used in certain applications of the present invention can be about 1.6 kg/m³ to about 960 kg/m³.

The polymeric foam tape can include a foam having at least one variable property throughout, wherein the variable property is selected from the group consisting of density, cell density, cell geometry, cell size, affinity to water, elasticity, thickness and width. The polymeric foam tape can include a foam based on one or more isocyanate or isocyanate containing compounds. The one or more isocyanates and isocyanate containing compounds can include aliphatic isocyanate, aromatic isocyanate, cycloaliphatic isocyanate or a mixture thereof. In certain applications, the polymeric foam tape includes a polyurethane foam, being a product of a reaction of one or more polyols with one or more isocyanates or isocyanate containing compounds. In other applications, the polymeric foam tape includes a polyurea foam, being a product of a reaction of one or more polyamines with one or more isocyanates or isocyanate containing compounds. As non-limiting examples, The polymeric foam tape can be selected from the group consisting of polyolefin-based polymers, polyester-based polymers, polyether-based polymers, polystyrene-based polymers, and mixtures thereof.

The polymeric foam tape can include one or more additives to alter the surface properties of the polymeric foam or adhesion to the one or more curable resins. The curable resin can be applied to the polymeric foam tape at a load of about 99/1 resin to polymeric foam tape weight ratio to 1/99 resin to polymeric foam tape weight ratio.

The one or more curable resins can includes a two part epoxy/amine type system, and epoxy/amine latent system, an acrylate system or the like and may be cured by heat, chemical reaction, exposure to moisture or otherwise. In certain desirable applications, at least one of the one or more curable resins is a moisture or water-curable resin. Moreover, at least one of the one or more water curable resins can be an isocyanate containing material.

The isocyanate containing material can be selected from the following group: aromatic isocyanates, aliphatic isocyanates, cycloaliphatic isocyanates, isocyanate-based adducts, isocyanate-based derivatives, isocyanate-prepolymers, isocyanate-oligomers and isocyanate-quasi prepolymers. In certain applications, the isocyanate containing material has an isocyanate to active hydrogen equivalent weight ratio greater than about 1. The isocyanate containing material can contain at least one catalyst promoting the reaction of the isocyanate with water. In certain applications, at least one of the one or more water curable resins can be Plaster of Paris. At least one of the one or more curable resins can be cured via chemical reaction, UV light, laser light, radiation, or heat induced reaction.

In one embodiment, the water curable resin includes a pre-polymer formed from a polyol and an isocyanate containing material. For example, a diol (e.g., a polycarbonate diol) can be reacted with a isocyanate such as a toluene diisocyanate or a methylene diisocyanate (e.g., a uretonimine modified methylene diphenyl diisocyanate) to form a pre-polymer. Thus, the water curable resin can include one or any combination of a polyol, an isocyanate and/or a pre-polymer formed from the polyol and isocyanate in a weight percents of the water curable resin that is typically at least about 40 % by weight, more typically at least about 70% by weight and even more typically at least about 90% or even possibly at least about 95% by weight of the curable resin. The water curable resin can also include any of the additives discussed herein, but preferably includes, one or any combination of a catalyst (e.g., a tin catalyst), an adhesion promoter (e.g., a silane) and/or a shelf life enhancer (e.g., a halogen or halogen containing compound such as a halide).

One particularly suitable foam material or foam tape is disclosed in U.S. Patent 6,984,216, which is incorporated herein by reference for all purposes. Moreover, for exemplary purposes, Table I below provides an example of a curable resin for application to the foam material to form the foam tape.

| **Ingredients** | **Weight Percent** |
|---|---|
| Polyol (Polycarbonate Diol) | 39 |
| Isocyanate (Uretonimine modified MDI) | 59.68 |
| Dibutyltin Dilaurate | 0.012 |
| Glycidoxypropyltimethoxysilane | 1.191 |
| Benzoyl Chloride | 0.117 |

The above formulation of the water curable resin is provided as merely exemplary, it is contemplated that the weight percents of the various ingredients may vary by ± 50% or more or by ± 30% or ± 10%. For example, a value of 50 ± 10% is a range of 45 to 55. Moreover, ingredients may be added or removed from the formulations.

It is generally contemplated that the adhesive material of the present invention can be the adhesive foam material or tape alone. However, it also possible that a base material may be employed in conjunction with the adhesive tape. In such an embodiment, the adhesive foam tape includes the one or more curable resins and the base material is a formulated material that is substantially separate from the one or more curable resins.

As a further alternative, it is contemplated that the one or more curable resins of the foam tape can be formed of formed of or replaced by the same materials that form the base material. Thus, the one or more curable resins can include any of the materials typical of the base material such as the epoxy resin, elastomer or adduct, one or more additives, curing agent and/or curing agent accelerator, blowing agent and/or blowing agent accelerator, or any other ingredients, which are discussed in detail herein with relation to the base material . These ingredients may then be integrated with a polymeric (e.g., a polyurethane) foam as described above with respect to the one or more curable resins. In such an instance, the one or more curable resins will be integrated with the polymeric foam preferably to form a foam tape that can be used, preferably alone, to carry out any of the adhesions discussed herein.

Where the one or more curable resins are formulated from the ingredients of the base material, the one or more resins may be curable by heat as described herein, but may also be cured by exposure to moisture like several of the resins discussed above. One particular material, which is curable by exposure to moisture and which may be employed as the one or more curable resins, is described in U.S. Patent Application attorney docket number 1001-256, titled Multiple or Single Stage Cure Adhesive Material and Method of Use, filed on the same date as the present application.

### Possible Base Material

The base material, when used, is typically a curable and/or thermosettable material and is most often composed at least partially or substantially entirely of polymeric material. As used herein, the term polymeric material includes any material that is polymeric or becomes polymeric (i.e., polymerizes) upon curing of the base material and/or adhesive material. The polymeric material can include only one type of polymer or can be an admixtue of 2, 3, 4 or several different polymers. The polymeric material admixture can include a variety of different polymers (e.g., copolymers), such as thermoplastics, elastomers, plastomers combinations thereof or the like. For example, and without limitation, polymers that might be appropriately incorporated into the polymeric admixture include halogenated polymers, polycarbonates, polyolefins (e.g., polyethylene, polypropylene), polyethylenes, polypropylenes, poly(ethylene oxides), polysiloxane, polyethers, polyphosphazines, poly(ethyleneimines), polyamides, polyketones, polyurethanes, polyesters, polyimides, polyisobutylenes, polyacrylonitriles, poly(vinyl chlorides), poly(methyl methacrylates), poly(vinyl acetates), poly(vinylidene chlorides), polytetrafluoroethylenes, polyisoprenes, polyacrylamides, silanes, sulfones, allyls, olefins, styrenes, acrylates, methacrylates, epoxies, silicones, phenolics, rubbers, polyphenylene oxides, terphthalates, acetates (e.g., EVA), acrylates, methacrylates (e.g., ethylene methyl acrylate polymer) and any combination or mixtures thereof.

The polymeric admixture typically comprises a substantial portion of the adhesive material (e.g., up to 85% by weight or greater). Preferably, the polymeric admixture comprises about 25% to about 85%, more preferably about 40% to about 75% and even more preferably about 50% to about 70% by weight of the adhesive material.

The polymeric admixture or base material typically can be at least partially or substantially entirely based upon epoxy chemistry and can include one or more epoxy materials. Epoxy resin or material is used herein to mean any of the conventional monomeric, dimeric, oligomeric or polymeric epoxy materials containing at least one epoxy functional group or combinations thereof. The polymer-based materials may be epoxy containing materials having one or more oxirane rings polymerizable by a ring opening reaction. In preferred embodiments, the adhesive material or base material includes up to about 80 % epoxy resin. More preferably, the adhesive material or base material includes between about 10 % and 70% by weight epoxy resin and still more preferably between about 30 % and 50 % by weight epoxy resin.

The epoxy may be aliphatic, cycloaliphatic, aromatic or the like. The epoxy may be supplied as a solid (e.g., as pellets, chunks, pieces or the like), a liquid (e.g., an epoxy resin that is liquid at 23 °C or a combination thereof). The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. Preferably, an epoxy resin is added to the adhesive material to increase adhesion properties of the material. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified.

In some embodiments, one or more of the epoxy resins employed in the base material are multifunctional and/or have relatively high functionalities (e.g., epoxy functionalities). When such relatively high functionality resins are employed, it is typically desirable for at least 5%, more typically at least 10% and even more typically at least 15% or even at least 20% of the epoxy resins have a functionality that is greater than about 2 (e.g., about 2.6 or greater) and possibly greater than about 3 (e.g., about 3.6 or greater). Advantageously, such higher functionality can, in certain instances, provide for improved high temperature performance (e.g., higher Tg prior to, during or after secondary cure), improved lap shear strength or a combination thereof.

In one preferred embodiment, at least 70%, 90%, 95% or more of the polymeric material is comprised of a bisphenol A epoxy resin, a bisphenol F epoxy resin, glycidyl ethers thereof, or any combination thereof.

### Secondary Curing agents

One or more secondary curing agents and/or curing agent accelerators may be added to the adhesive material and particularly to the base material. Thus, it is contemplated that a single curing agent may be employed or two or more curing agents may be employed. When two or more curing agents are employed, it is contemplated that the two or more agents can be from the same class or different class of curing agents and may be directed at curing same or different polymeric materials.

Amounts of secondary curing agent and curing agent accelerators can vary widely within the base material depending upon the type of cellular structure desired, the desired amount or rate of expansion of the adhesive material if the adhesive material is expandable, the desired structural properties of the adhesive material or the like. Exemplary ranges for effective amounts of the curing agents, curing agent accelerators or both together present in the adhesive material range from about 0.1 % by weight to about 7 % by weight of the base material.

Preferably, the secondary curing agents assist the adhesive material, particularly the base material, in curing by crosslinking of the polymers, epoxy resins or both. It is also preferable for the curing agents to assist in thermosetting the adhesive material. Useful classes of curing agents are materials selected from aliphatic or aromatic amines or their respective adducts, amidoamines, polyamides, imidazoles, cycloaliphatic amines, anhydrides, polycarboxylic polyesters, isocyanates, phenol-based resins (such as phenol or cresol novolak resins, copolymers such as those of phenol terpene, polyvinyl phenol, or bisphenol-A formaldehyde copolymers, bishydroxyphenyl alkanes or the like), peroxides or mixtures thereof. Particularly preferred secondary curing agents include modified and unmodified polyamines or polyamides such as ethylene diamine, triethylenetetramine, diethylenetriamine, tetraethylenepentamine, cyanoguanidine, dicyandiamides and the like. An accelerator for the curing agents (e.g., a modified or unmodified urea such as methylene diphenyl bis urea, an imidazole, teriary amine or a combination thereof) may also be provided for preparing the adhesive material.

Though longer curing times are also possible, curing times of less than 5 minutes, and even less than 30 seconds are possible for the formulation of the present invention. Moreover, such curing times can depend upon whether additional energy (e.g., heat, light, radiation) is applied to the material or whether the material is cured at room temperature and what degree of curing is desired for any given stage of processing for an article of manufacture.

### Blowing Agent

One or more blowing agents may be added to the adhesive material, and particularly the base material, for producing inert gasses that form, as desired, an open and/or closed cellular structure within the base material, particularly the base material when used. In this manner, it may be possible to lower the density of articles fabricated from the material. In addition, the material expansion can help to improve sealing capability, acoustic damping or both.

The blowing agent[s] may include one or more nitrogen containing groups such as amides, amines and the like. Examples of suitable blowing agents include azodicarbonamide, dinitrosopentamethylenetetramine, 4,4ᵢ-oxy-bis-(benzenesulphonylhydrazide), trihydrazinotriazine and N, Nᵢ-dimethyl-N,Nᵢ-dinitrosoterephthalamide. Physical blowing agents such as solvents encapsulated in a thermoplastic shell may also be used. Such agents are sold under the tradename EXPANCEL and are commercially available from Akzo Nobel.

An accelerator for the blowing agent[s] may also be provided in the adhesive material and particularly the base material. Various accelerators may be used to lower the temperature of activation and/or increase the rate at which the blowing agents form inert gasses. One preferred blowing agent accelerator is a metal salt, or is an oxide, e.g. a metal oxide, such as zinc oxide. Other preferred accelerators include organic bases such as urea and organic acids such as adipic or benzoic acid. Zinc benzene sulfinate may also be a desirable accelerator.

Amounts of blowing agents and blowing agent accelerators can vary widely within the adhesive material depending upon the type of cellular structure desired, the desired amount of expansion of the adhesive material, the desired rate of expansion and the like. Exemplary ranges for the amounts of blowing agent and blowing agent accelerator in the adhesive material range from about 0.001 % by weight to about 5 % by weight and are preferably in the adhesive material or base material in fractions of weight percentages.

In one embodiment, the present invention contemplates the omission of a blowing agent. Preferably, however, the material, the blowing agent, when used, or both of the present invention are thermally activated. Alternatively, other agents may be employed for realizing activation by other means, such as moisture, radiation, or otherwise.

### Elastomer or Adduct

The adhesive material, and particularly the base material, can include elastomer that is mixed into the adhesive or base material, in a non-reacted state or elastomer that is reacted with another material (e.g., as an adduct) or a combination of both. Examples of suitable elastomers include, without limitation natural rubber, styrene-butadiene rubber, polyisoprene, polyisobutylene, polybutadiene, isoprene-butadiene copolymer, neoprene, butadiene nitrile rubber (e.g., carboxyl-terminated butadiene nitrile), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene diene rubbers), chlorosulphonated polyethylene, fluorinated hydrocarbons and the like. In one embodiment, recycled tire rubber is employed.

In a highly preferred embodiment, an elastomer-containing adduct is employed in the adhesive or base material of the present invention, and preferably in a relatively high concentration (e.g., on the order of the epoxy resin). The adduct may be included in an amount of up to about 80 % by weight of the adhesive or base material. More preferably, the elastomer-containing adduct is approximately 20 to 60%, and more preferably is about 35 % to 55% by weight of the adhesive or base material. Of course, the elastomer-containing adduct may be a combination of two or more particular adducts and the adducts may be solid adducts or liquid adducts at a temperature of 23 °C or may also be combinations thereof.

Preferred epoxy/elastomer adducts generally include about 1:5 to 5:1 parts of epoxy to elastomer, and more preferably about 1:3 to 3:1 parts or epoxy to elastomer. More typically, the adduct includes at least about 5%, more typically at least about 12% and even more typically at least about 18% elastomer and also typically includes not greater than about 50%, even more typically no greater than about 40% and still more typically no greater than about 30% elastomer, although higher or lower percentages are possible. The elastomer compound may be any suitable art disclosed elastomer such as a thermosetting elastomer Examples of additional or alternative epoxy/elastomer or other adducts suitable for use in the present invention are disclosed in U.S. Patent Publication 2004/0204551, which is incorporated herein by reference for all purposes.

The elastomer-containing adduct, when added to the adhesive or base material, preferably is added to modify structural properties of the material such as strength, toughness, stiffness, flexural modulus, or the like.

### Filler

The adhesive material, and particularly the base material, may also include one or more fillers, including but not limited to particulated materials (e.g., powder), beads, microspheres, nanoparticles or the like. Preferably the filler includes a relatively low-density material that is generally non-reactive with the other components present in the adhesive or base material.

Examples of fillers include silica, diatomaceous earth, glass, clay, talc, pigments, colorants, glass beads or bubbles, glass, carbon ceramic fibers, antioxidants, and the like. Such fillers, particularly clays, can assist the adhesive material in leveling itself during flow of the material. The clays that may be used as fillers may include nanoparticles of clay and/or clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite, wollastonite or mixtures thereof. The clays may also include minor amounts of other ingredients such as carbonates, feldspars, micas and quartz. Titanium dioxide might also be employed. In one or more embodiments of the present invention, it can be desirable for a substantial portion (e.g., 40%, 70% or more) of the fillers (e.g., the mineral fillers such as wollastonite or the others) to have a relatively high aspect ratio of greater than or equal to 2 to 1, although possibly lower, more typically greater than or equal to 3 or 4 to 1, and possibly greater than or equal to 8 to 1, 12 to 1, 20 to 1 or more.

In one preferred embodiment, one or more mineral or stone type fillers such as calcium carbonate, sodium carbonate or the like may be used as fillers. In another preferred embodiment, silicate minerals such as mica may be used as fillers.

When employed, the fillers in the adhesive or base material can range from 1 % to 90 % by weight of the adhesive material. According to some embodiments, the adhesive or base material may include from about 3 % to about 30 % by weight, and more preferably about 10 % to about 20 % by weight clays or similar fillers.

It is contemplated that one of the fillers or other components of the material may be thixotropic for assisting in controlling flow of the material as well as properties such as tensile, compressive or shear strength.

### Other Additives

Other additives, agents or performance modifiers may also be included in the adhesive material, and particularly the base material, as desired, including but not limited to a UV resistant agent, a flame retardant, an impact modifier, core/shell polymer, particulate rubber, a heat stabilizer, a UV photoinitiator, a colorant, a processing aid, an anti-oxidant, a lubricant, a coagent, a reinforcement (e.g., chopped or continuous glass, glass fiber, ceramics and ceramic fibers, aramid fibers, aramid pulp, carbon fiber, acrylate fiber, polyamide fiber, polypropylene fibers, combinations thereof or the like). In one preferred embodiment, for example, an acrylate coagent may be employed for enhancing cure density. It is also contemplated that the adhesive or base material may include about 0.10 to about 5.00 weight percent of an anti-oxidant such as a propionate (e.g., pentaerythritol tetrakis (3-(3,5-di-tert-butyl-4-hydroxyphenyl) propionate)) for assisting in controlling oxidation, cure rate or both. An example of such an anti-oxidant is sold under the tradename IRGANOX^{®} 1010 and is commercially available from Ciba Specialty Chemicals Company, 141 Klybeckstrasse, Postfach, 4002 Basel, Switzerland.

It is additionally noted that additives and fillers can also be used where appropriate in the one or more curable resins of the foam tape even when those one or more curable resins are formulated from materials different from the base material, for example, when the one or more curable resins are formulated of a polyol and isocyanate.

### Formation

When a base material is employed, formation of the adhesive material can be accomplished according to a variety of new or known techniques. According to one embodiment, the adhesive material is formed by supplying the components of the base material in solid form such as pellets, chunks and the like, in liquid form or a combination thereof. The components are typically combined in one or more containers such as large bins or other containers. Preferably, the containers can be used to intermix the components by rotating or otherwise moving the container. Thereafter, heat, pressure or a combination thereof may be applied to soften or liquefy the components such that the components can be intermixed by stirring or otherwise into a single homogenous composition. The foam tape with the curable resins can be integrated with the homogenous composition during mixing or thereafter.

According to another embodiment, when base material is employed, the base material may be formed by heating one or more of the components that is generally easier to soften or liquefy such as the polymer based materials to induce those components into a mixable state. Thereafter, the remaining components may then be intermixed with the softened components. Again, the foam tape may be integrated with the formed composition during or after mixing.

Depending upon the components used, it may be important to assure that the temperature of the components remains below certain activation temperatures that might cause the adhesive and/or base material to activate (e.g., form gasses, expand, flow, cure, thermoset or otherwise activate). Notably, when the adhesive and/or base material contains a blowing agent or certain curing agents, it is typically desirable to maintain the temperature of the material below a temperature that will activate the blowing agent or curing agent during formation of the material or before the material is applied to a surface. In situations where it is desirable to maintain the adhesive and/or base material at lower temperatures, it may be desirable to maintain the components in a semi-solid or viscoelastic state using pressure or a combination of pressure and heat to intermix the components of the material. Various machines have been designed to applying heat, pressure or both to materials.

The adhesive and/or base material can be formed into a liquid, semi-solid, sold or combination thereof. As such, the adhesive and/or base material may be formed into a sprayable liquid, a paste, solid or semi-solid masses or the like and can be supplied as a paste, tape, film or the like.

The foam material or tape with the one or more curable resins, as suggested, can be used on its own as the adhesive material or can be integrated with the composition composed of the base material and possibly other ingredients of the adhesive material. When integrated, the foam tape can be layers upon one or more surfaces of the composition or can be integrated into the composition, for example by sandwiching the tape between layers of the composition or by mixing the tape into the composition.

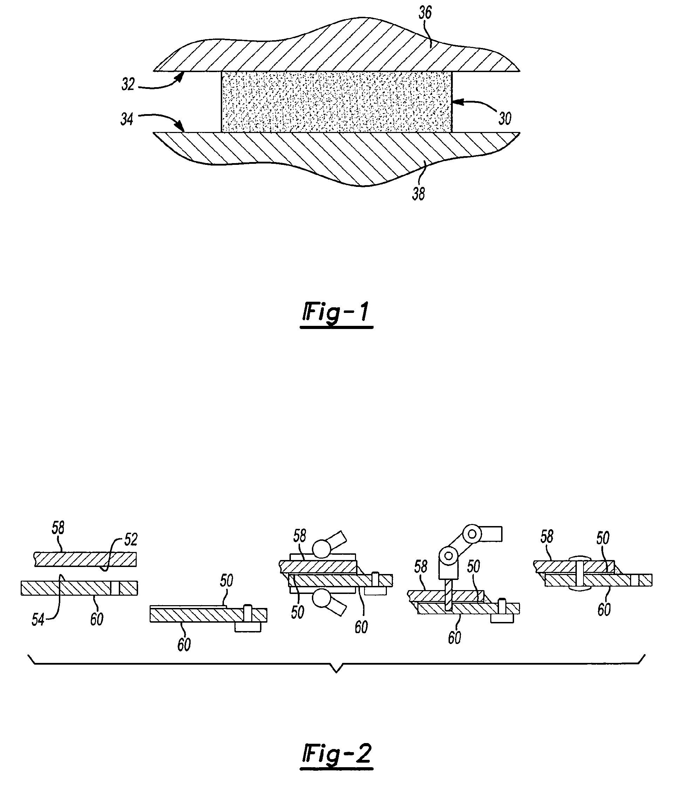

In one preferred embodiment, the adhesive material is comprised of the base material and the foam tape where the base material and foam tape are separate from each other (i.e., they are not intermixed or interlayered with each other). In such an embodiment, the base material and the foam tape independently adhere to two or more surfaces such as the surfaces discussed below with respect to Fig. 1. The base material and the foam material can be side-by-side and adjacent to each other between the two surfaces. Adjacent as used in the previous sentence can mean spaced apart by a small distance (e.g., less than 30, 20, 10 or even 4 centimeters) or contacting each other. In the instance where the base material is contacting the foam tape, it is contemplated that a small degree of intermixing of the two may occur at their interface.

### Application

The adhesive material is typically contacted with one or more surfaces and adhered to the one or more surfaces. The adhesive material of the present invention is typically adhered to the one or more surfaces with a first degree or level of adhesion and then adhered to the one or more surfaces with a second degree or level of adhesion. However, it could be adhered to the surfaces with only the first degree or level of adhesion.

In a preferred embodiment, the curable resins of the foam tape are activated to cure by exposure to moisture. This could be the only curing of the adhesive material particularly where the adhesive material consists essentially of the tape with the curable resins. However, this curing can also be only a first cure that is followed by a second cure (e.g., a cure of the base material) that provides a second level or degree of adhesion.

With reference to Fig. 1, the adhesive material 30 is contacted with at least one, two, three or more surfaces, but as shown a first surface 32 and a second surface 34. The surfaces may be provided by one, two, three or more members, but shown as a first member 36 and a second member 38 of an article of manufacture. Thereafter, the adhesive material 30 is at least partially or substantially fully cured to increase adhesion of the adhesive material 30 to the surface[s]. 32, 34 and/or to enhance a strength (e.g., tensile or lap shear strength) of connection between the surface[s] 32, 34, the member[s] 36, 38 or both.

It will be understood that the adhesive material may be formulated to have a degree of natural tack to assist in adhesion to the surfaces or may be substantially tack free prior to exposure to moisture or other cure mechanism. It is also contemplated that one of the blowing agents may be employed to expand the adhesive material, foam the adhesive material, assist the adhesive material in whetting the surfaces or any combination thereof during the curing.

In a preferred embodiment, however, the curable resins of the foam tape are activated to cure (e.g., cross-link) by exposure of the adhesive material and particularly the foam tape to moisture. Exposure to moisture, as used herein, is typically meant to refer to any form of exposure to water, although exposure to other liquids is possible as well. Thus, without limitation, exposure to humidity, steam, liquid water, any material including water, combinations thereof or the like can be include within exposure to water, unless otherwise specifically stated.

The foam tape can be exposed to moisture by locating (e.g., dabbing, brushing, spraying, swabbing) a layer of moisture on one or more surfaces of the adhesive material. The adhesive material may be exposed to moisture by submersion of the adhesive material into liquid including water. If the adhesive is supplied in a liquid state, as a paste, in a flowable state, in a mixable state, in a semi-solid state or any combination thereof, water can be intermixed into the adhesive material.

Thus, whether the foam material or tape with its curable resin[s] employed by itself, is located on surface of the composition or base material of the adhesive material or intermixed into the composition or base material of the adhesive material, or used in conjunction with (e.g., side by side) the base material, multiple techniques can be employed to expose the foam material or tape to moisture. It is also contemplated that openings, (e.g., cavities or through-holes), materials such as fibers or other material or both can be employed to assist in moving water into the adhesive material and increase exposure of the foam material and its curable resin[s] to moisture thereby potentially increasing the degree of cure of the curable resin[s]. It is even further contemplated that the adhesive material including the adhesive foam material or tape can be heated to an elevated temperature to assist in moving water into the adhesive material. Such an elevated temperature is typically at least about 30 °C, more typically at least about 40 °C and is typically less than about 120 °C, more typically less than about 100 °C, although higher or lower temperatures are possible.

As discussed earlier, curing of the resin[s] of the foam tape may be the only curing particularly if no base material is employed. However, according to one preferred embodiment the adhesive material goes through a secondary activation stage that involves at least curing of the base material by the secondary curing agent.

The secondary curing agent may be activated by various different mechanisms, some of which have been discussed herein. In one preferred embodiment, the adhesive material is activated to expand, foam, cure (e.g. cross-link, thermoset), whet, adhere or any combination thereof through exposure to elevated temperatures. Exemplary elevated temperatures for the secondary cure are desirably between about 80°C and about 200°C and more typically between about 100°C and about 140°C, although higher and lower temperature may be employed unless otherwise stated. Such temperature can be experienced, for example, in an autoclave or an oven or can be brought about, for example, by heating blankets, IR lamps, induction heating.

Advantageously, when the adhesive material is a two-stage curing material, the first cure can provide a strength of connection, by itself or in conjunction with other connections (e.g., mechanical fasteners), to a surface or between two or more surfaces sufficient to allow the member[s] that provide the surface to be further processed (e.g., transported, moved, further assembled). Then the secondary cure can provide a connection, by itself or in conjunction with other connections (e.g., mechanical fasteners), of sufficient strength for use of the article of manufacture. For example, for members of an aerospace vehicle or automotive vehicle, the first cure will provide a sufficiently strong connection for the members to go through further assembly or other processing without becoming disconnected. Then the secondary cure will provide connection sufficient to endure forces that might be experienced in flight or during driving of the vehicle. Again, each of these adhesive connections may be sufficient by themselves or in conjunction with other connections (e.g., mechanical fasteners).

One preferred embodiment of a process using the adhesive material 50 of the present invention is illustrated in Fig. 2. As shown, adhesive material is located between and contacted with a first surface 52 and a second surface 54. In the embodiment shown, the first surface 52 is part of a first member 58 (e.g., panel) and the second surface 54 is part of a second member 60 (e.g., panel). In one embodiment, the first and second members are part of an aerospace vehicle. Suitable potential parts or members can include, without limitation, skins, ribs, spars, brackets, any combinations thereof or the like. Preferred parts are "box type components" or tunnel forming components that are preferably part of aerospace control surfaces or structures such as elevators, rudders, wing movables (e.g., inner and outer flaps and/or aileron), stabilizers (e.g., horizontal stabilizers), fins (e.g., vertical fins).

During or after contact with the surfaces 52, 54, the adhesive undergoes a first stage cure that involves curing of the curable resins of the foam material or tape. Thereafter, the members 58, 60 may be further processed. For example, as shown openings (e.g., through-holes) can be formed (e.g., drilled) in and/or through the first member, the second member, the adhesive or any combination thereof. In turn, a fastener such as a rivet may be located within the opening for assisting in attaching the first member to the second member. Moreover, before, during or after the further processing, the adhesive material 50 of adhesive can undergo a secondary cure if a base material is employed. For example, the adhesive material can be exposed to elevated temperature of between about 80°C and about 200°C and more typically between about 100°C and about 140°C for secondary cure of the base material.

It is contemplated that after curing of the polymeric tape, the adhesive material will exhibit lap shear strength of at least about 0.7 MPa, although possibly lower, more typically at least about 1.6 MPa and even more possibly at least about 2.4 MPa. It is also contemplated after secondary cure, the adhesive material will exhibit lap shear strength below about 100 MPa, although possibly higher, more typically below about 10 MPa or 7 MPa and even more possibly below 4.5 MPa. It is contemplated that after the second cure, the adhesive material will exhibit lap shear strength of at least about 10 Mpa, although possibly lower, at least about 15 MPa, more typically at least about 20 MPa and even more possibly at least about 25 MPa. For a single cure of the polymeric tape, the strengths are more typically in line with those discussed for after secondary cure. Lap shear strengths for the present invention can be calculated according to ASTM D1002-01 titled "Apparent Shear Strength of Single-Lap-Joint Adhesively Bonded Metal Specimens by Tension Loading (Metal-to Metal) or ASTM D3528-96 titled "Standard Test Method for Strength Properties of Double Lap Shear Adhesive Joints by Tension Loading".

As used herein, the adhesive material can include only the tape with the curable resin thereon or it can include the base material combined with the tape having the curable resin (e.g., integrated with each other, intermixed or interlayered with each other or side by side). In either instance, adhesive material and particularly strips of the adhesive material can be used for adhesion in multiple instances in the automotive industry (i.e., for automotive vehicles) or other industries or articles of manufacture. As one example, the adhesive material is employed to adhere surfaces and/or members to each other where the surfaces and/or members are also attached to each other with one or more attachments (e.g., fasteners, welds or the like). In such a circumstance, the number of attachments other than the adhesive material attachment used to attach the members to each other may be lowered. As another example, the adhesive material can be used to adhere surface and/or member to each other where it is difficult or impossible to use attachments (e.g, fasteners such as rivets, welds, combinations thereof or the like). For situations where a stimulus such as heat is not typically available for a second cure, it can be desirable to use the adhesive material as a single cure material that includes only the tape with the curable resin thereon. One example of such situations includes adhesion of tiles to a floor or wall for forming tile flooring or walls.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

The preferred embodiment of the present invention has been disclosed. A person of ordinary skill in the art would realize however, that certain modifications would come within the teachings of this invention. Therefore, the following claims should be studied to determine the true scope and content of the invention.

## Claims

1. A process of adhesion, comprising
providing a first surface and a second surface, the first surface and second surface being part of one or more members of an automotive vehicle;
providing an adhesive material, the adhesive material including a foam tape with a curable resin;
contacting the adhesive material with the first surface and the second surface; and
curing the curable resin for causing a first level of adhesion to the first and second surface.

2. A process as in claim 1 wherein the curing of the curable resin includes exposing the curable resin to moisture.

3. A process as in claim 1 or 2 wherein the first surface is attached to the second surface with one or more attachments other than the adhesive material.

4. A process as in claim 1, 2 or 3 wherein the one or more attachments are welds.

5. A process as in claim 1, 2, 3 or 4 wherein the adhesive material includes a base material with the foam tape and the process further comprises curing the base material of the adhesive material for causing a second level of adhesion to the first and second surface.

6. A process as in claim 5 wherein the base material includes an epoxy resin and curing of the base material is accomplished by exposure to elevated temperatures.

7. A process as in claim 5 or 6 wherein the base material includes an amine curing agent.

8. A process as in claim 5, 6 or 7 wherein the base material includes a blowing agent.

9. A process as in claim 5, 6, 7 or 8 wherein the elevated temperatures are provided during an automotive coating process.

10. A process as in any of claims 1-9 wherein the curable resin includes a polyol, an isocyanate or a pre-polymer formed therefrom.

11. A process as in any of claims 1-10 wherein the curable resin includes a tin catalyst.

12. A process as in any of claims 1-11 wherein the curable resin includes an adhesion promoter.
